# EUROPEAN PATENT SPECIFICATION

(11) **EP 3 859 919 B1**
(45) Date of publication and mention of the grant of the patent: **31.12.2025**
(21) Application number: 20154476.4
(22) Date of filing: 30.01.2020
(51) Int. Cl.: H02G 3/12, H02G 3/14, H02G 3/08

(54) **ELECTRICAL DEVICE**
ELEKTRISCHE VORRICHTUNG
DISPOSITIF ÉLECTRIQUE

(43) Date of publication of application: 04.08.2021
(73) Proprietor: Berker GmbH & Co. KG, 66440 Blieskastel (DE)
(72) Inventor: CONZADORI, Remo, 25018 MONTICHIARI (BS) (IT)
(74) Representative: Ipsilon

(56) References cited:
- EP-A1- 0 019 801
- WO-A1-2007/077297
- DE-A1- 102008 015 128
- DE-B- 1 143 884
- DE-U1- 29 616 958
- US-A- 4 163 137

## Description

The invention relates to the field of electrical appliances or devices and in particular to an electrical device to be mounted into a flush-mounted box.

For the purpose of installing the electrical device to the wall, an opening or recess is usually provided in the wall. The flush-mounted box is then inserted into the opening or recess before the electrical device is mounted into the flush-mounted box.

The electrical device typically comprises a mounting frame having a front side and a back side. The electrical device can typically include fittings in the form of a functional module such as for example a power outlet module, a switch module, a telephone or data connection module, a timer module, charger modules or dimmer modules, or combinations thereof. One or several such functional modules can be mounted to the mounting frame. Typically, the mounting frame can then be mounted into the flush-mounted box by means of screws.

Within buildings such as houses, electricians commonly install many electrical devices described above. For that purpose, a plurality of openings or recesses are to be provided in the walls of the building. However, those openings or recesses can form air leakage pathways which can be detrimental to the building's energy consumption. The air leakage pathways can lead to an energy loss of the building.

To reduce the air leakage through the recesses or openings in which the flush-mounted boxes are mounted, specific flush-mounted boxes are known from prior art. Those specific flush-mounted boxes can comprise airtight membranes arranged at the bottom of the box which ensures a good fixation of the conduits thus allowing their adjustment to a desired position without affecting the airtightness of the box. However, the specific flush-mounted boxes are costly in the production and are costly to install when they have to replace standard flush-mounted boxes already present in the building in view of reducing the energy consumption of the building.

To address this, DE 10 2008 015 128 A1 discloses a sealing sleeve that is inserted into a flush-mounted box, into which an electrical device having a mounting frame is then inserted.

DE 11 43 884 B shows a seal for a mounting frame of an electrical appliance. The seal is arranged along an edge of a support ring of the electrical appliance, partially covering the front and rear sides thereof along the edge of the support ring. The gasket is configured to abut a front face of a wall or a flush-mounted box. In addition, a collar-like portion of the gasket is provided to be inserted into a circumferential slot in the flush-mounted box.

DE 296 16 958 U1 discloses a sealing arrangement for splash-proof electrical devices mounted in a flush-mounted box. The sealing arrangement comprises a first sealing element for sealing between a mounting frame that is configured for receiving a functional element and an aesthetic cover frame arranged on the mounting frame, and further comprises a second sealing element for sealing between the aesthetic cover frame and the functional element received in the aesthetic cover frame.

This invention has as its object to propose a further alternative solution by proposing an electrical device and a method for manufacturing such an electrical device.

For this purpose, the present invention has as its object an electrical device to be mounted into a flush-mounted box. The flush-mounted box is inserted in an opening or a recess present in a wall. The electrical device comprises a mounting frame having a front side and a back side. The electrical device further comprises a first sealing membrane attached to the back side of the mounting frame and covering at least partially the back side of the mounting frame.

The mounting frame further comprises a mounting window for receiving a functional module and a second sealing membrane attached to the front side of the mounting frame, covering at least partially the front side of the mounting frame and configured to rest against a back surface of the functional module.

The electrical device further comprises a functional module received in the mounting window, the second sealing membrane resting against a rear side of the functional module.

The electrical device according to the invention has the advantage of reducing air leakage even when used with a standard flush-mounted box and in particular the air leakage between the mounting frame and the functional module.

In a preferred embodiment, the first sealing membrane is configured to rest against a mounting flange of the flush-mounted box and/or against a surface of the wall.

This allows for a more effective reduction of the air leakage through the opening or recess.

The mounting frame further comprises one or several fixation openings and/or one or several latching openings, the first sealing membrane covering the one or several fixation openings and/or the one or several latching openings.

According to the invention, the first sealing membrane covers all of the fixation openings and/or all of the latching openings.

Acording to the invention, the second sealing membrane is arranged circumferentially along the periphery of the mounting window.

This allows for a further reduction of the air leakage through the opening or recess and in particular the air leakage between the mounting frame and the functional module.

Preferably, the first sealing membrane and/or the second sealing membrane is/are made of an elastomer, preferably a thermoplastic elastomer.

In a preferred embodiment, the second sealing membrane is attached to the front side of the mounting frame by overmoulding.

Preferably, the first sealing membrane is attached to the back side of the mounting frame by overmoulding.

The invention further relates to a method for manufacturing an electrical device according to the invention. The method according to the invention comprises the following steps:
- providing a mounting frame having a front side and a back side;
- attaching a first sealing membrane to the back side of the mounting frame such that the first sealing membrane covers at least partially the back side of the mounting frame and further covers one or several fixation openings and/or one or several latching openings provided in the mounting frame, and
- attaching a second sealing membrane to the front side of the mounting frame such that the second sealing membrane circumferentially surrounds a periphery of a mounting window comprised in the mounting frame covering at least partially the front side of the mounting frame.

This allows for a reduction of the air leakage through the opening or recess and in particular the air leakage between the mounting frame and the functional module.

According to the invention, the second sealing membrane is attached to the front side of the mounting frame such that the second sealing membrane circumferentially surrounds the periphery of the mounting window.

This allows for a further reduction of the air leakage through the opening or recess and in particular the air leakage between the mounting frame and the functional module.

Preferably, a functional module is provided and is received in the mounting window such that the second sealing membrane rests against a rear side of the functional module.

This allows for a further reduction of the air leakage through the opening or recess and in particular the air leakage between the mounting frame and the functional module.

In a preferred embodiment, the first sealing membrane and/or the second sealing membrane is/are made of an elastomer, preferably a thermoplastic elastomer.

Preferably, the first sealing membrane is attached to the back side of the mounting frame and/or the second sealing membrane is attached to the front side of the mounting frame by overmoulding, preferably by overmoulding during the same production step and/or in the same moulding tool.

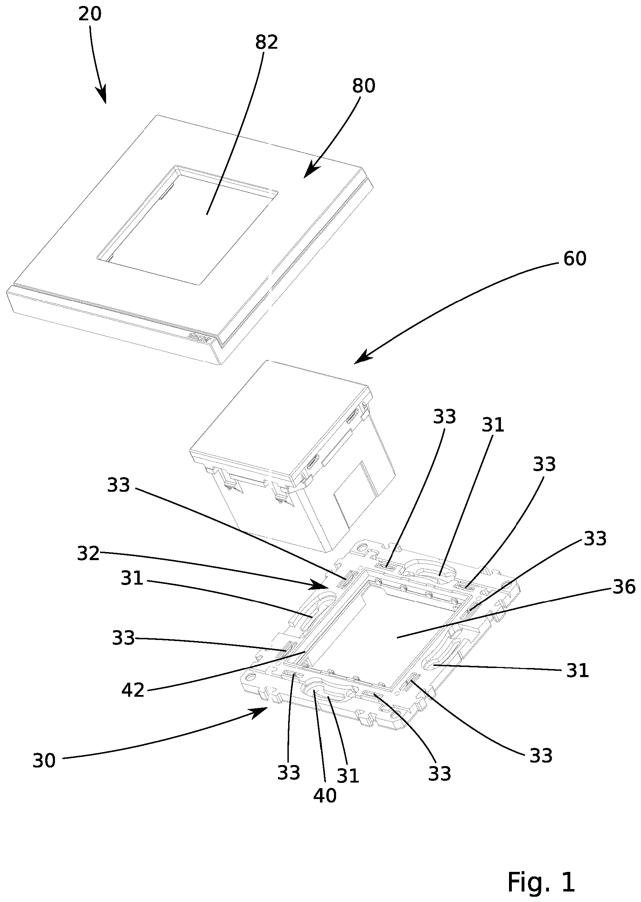

The invention will be better understood using the description below, which relates to two preferred embodiments, given by way of nonlimiting examples and explained with reference to the accompanying drawings, in which
- figure 1 shows an electrical device according to a first embodiment in an exploded view;

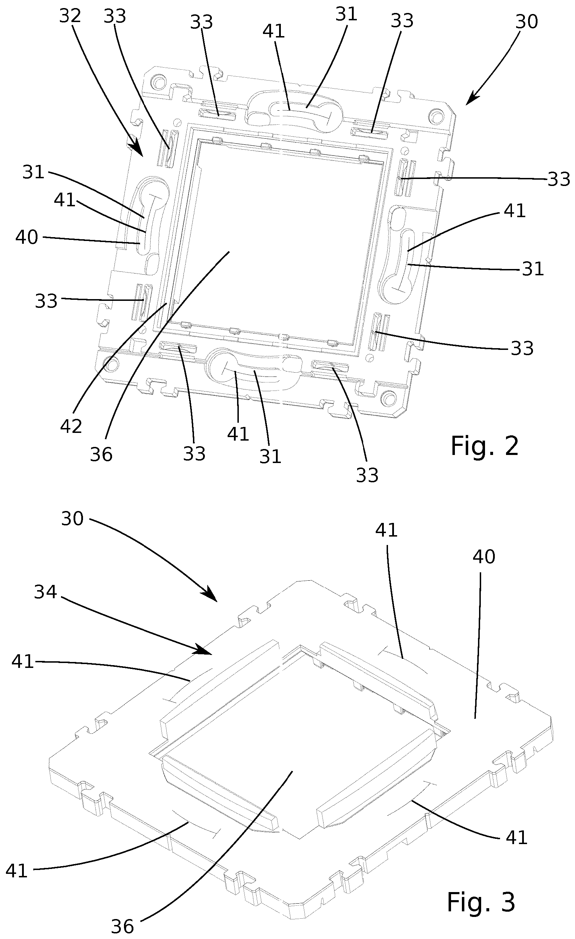

- figure 2 shows a view of a front side of a mounting frame of the electrical device according to the first embodiment;
- figure 3 shows a view of a back side of the mounting frame of the electrical device according to the first embodiment;
- figure 4 shows a sectional view of the electrical device according to the first embodiment; and
- figures 5 and 6 show the mounting frame of the electrical device according to a second embodiment.

The present application relates to an electrical device 20 to be mounted into a flush-mounted box. The present application also relates to a method for manufacturing an electrical device 20.

The electrical device 20 comprises a mounting frame 30 having a front side 32 and a back side 34.

The electrical device 20 can typically include fittings in the form of a functional module 60 such as for example a power outlet module, a switch module, a telephone or data connection module, a timer module, charger modules or dimmer modules, or combinations thereof. One or several such functional modules 60 can be mounted to the mounting frame 30.

The mounting frame 30 can be available in different sizes for allowing a different number of functional modules 60 to be mounted via the same mounting frame 30. Accordingly, a mounting window 36 present on the mounting frame 30 and configured to receive one or several functional modules 60 is also variable in size to allow for the simultaneous mounting of a varying number of functional modules 60.

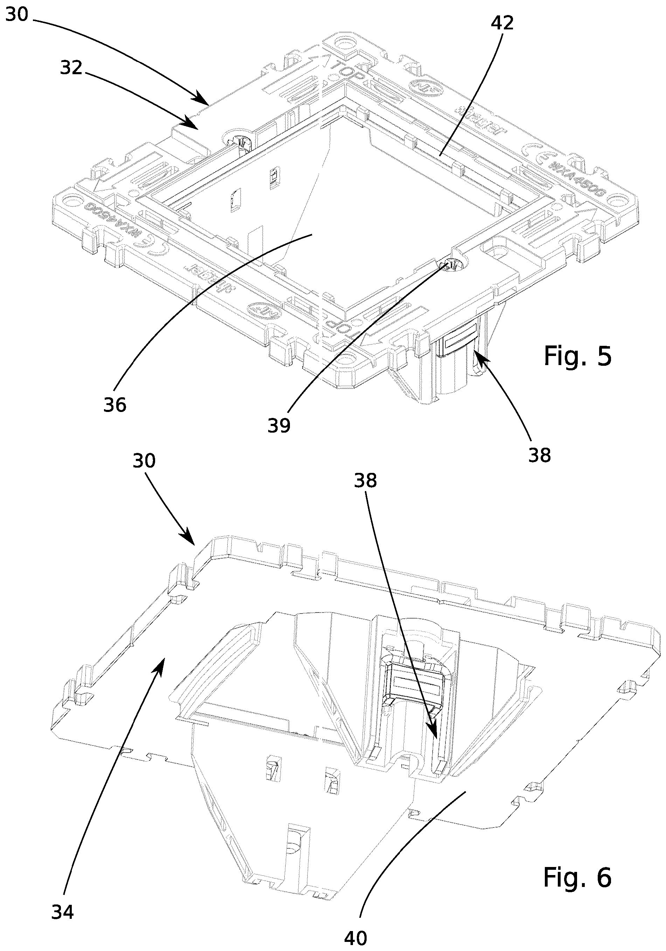

The electrical device 20 can be mounted into the flush-mounted box via the mounting frame 30 by means of screws. Alternatively or additionally, as shown in figures 5 and 6, the electrical device 20 can be mounted into the flush-mounted box via fixation claws 38. The fixation claws 38 can be provided on the mounting frame 30. The fixation claws 38 can adopt a retracted position, such that the electrical device 20 can firstly be easily inserted into the flush-mounted box. The retracted position of the claws 38 is shown in figures 5 and 6. For fixing the electrical device 20 to the flush-mounted box, the fixation claws 38 can then be swiveled to come into contact with an inner wall of the flush-mounted box to hold the electrical device 20 in the flush-mounted box. Typically, the claws 38 can be swiveled by turning a swiveling screw 39 of the respective fixation claw 38. Such fixation claws are known for instance from European Patent Application 1 950 858 A1.

For the purpose of installing the electrical device 20 to the wall, an opening or recess is usually provided in the wall. The flush-mounted box is then inserted into the opening or recess before the electrical device 20 is mounted into the flush-mounted box.

The electrical device 20 according to the application further comprises a first sealing membrane 40 attached to the back side 34 of the mounting frame 30 and covering at least partially the back side 34 of the mounting frame 30.

In a particular embodiment of the electrical device 20, the first sealing membrane 40 can cover the entirety of the back side 34 of the mounting frame 30. The back side 34 of the mounting frame 30 is the side of the mounting frame 30 which faces a surface of the wall presenting the opening or recess in which the flush-mounted box is inserted. The front side 32 of the mounting frame 30 is the side of the mounting frame 30 which faces inside of the room delimited by wall.

The mounting frame 30 comprises a mounting window 36 for receiving the functional module 60. The mounting window 36 can further be configured for receiving a plurality of functional modules 60. The first sealing membrane 40 can surround the mounting window 36 circumferentially.

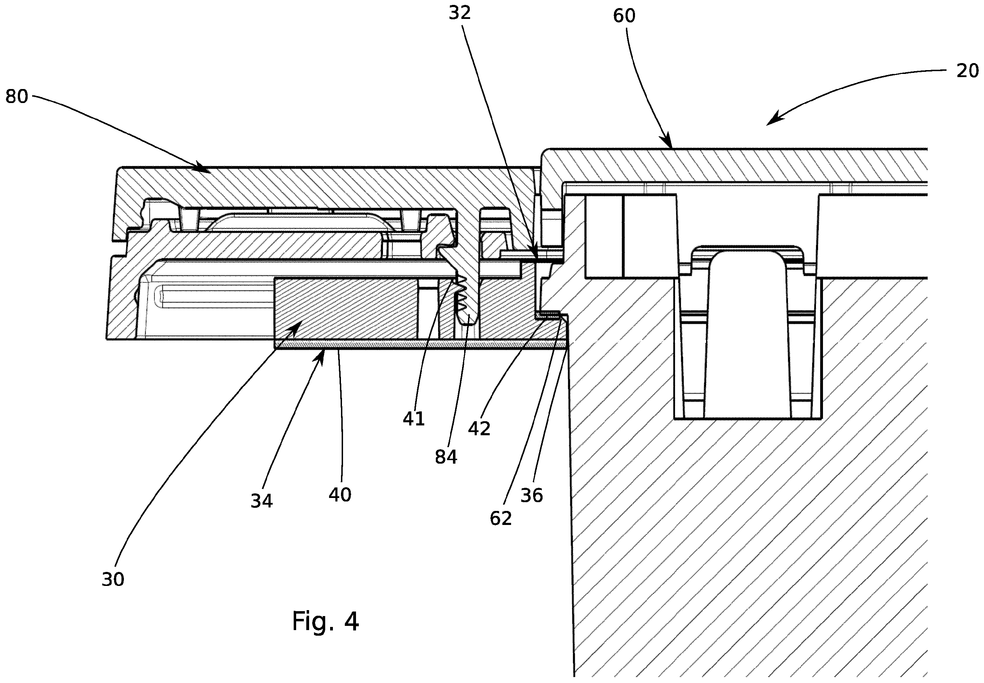

The electrical device 20 further comprises a second sealing membrane 42 attached to the front side 32 of the mounting frame 30. The second sealing membrane 42 covers at least partially the front side 32 of the mounting frame 30. The second sealing membrane 42 is arranged circumferentially along the periphery of the mounting window 36. The second sealing membrane 42 is configured to rest against a back surface 62 of the functional module 60. This is depicted in figure 4. The second sealing membrane 42 can cover at least all of the portions or areas of the front side 32 of the mounting frame 30 which could come in contact with the back surface 62 of the functional module 60.

The mounting frame 30 further comprises one or several fixation openings 31 and/or one or several latching openings 33, the first sealing membrane 40 covering the one or several fixation openings 31 and/or the one or several latching openings 33, in particular all of the fixation openings 31 and/or all of the latching openings 33.

The fixation openings 31 are intended for mounting the electrical device 20 into the flush-mounted box via the mounting frame 30. The fixation openings 31 present the shape of a curved keyhole.

Below the fixation openings 31, the first sealing membrane 40 can comprise incisions 41 for feeding through the fixation screws of the electrical device 20. The incisions 41 can have essentially a curvilinear shape.

The electrical device 20 can further comprise a cover 80, not covered by claims. The cover 80 can have a window 82 through which the functional module 60 can protrude or through which the functional module 60 can be accessed by a user. The cover 80 can comprise one or several toothed latching lugs 84 allowing for a snap fit connection with the latching openings 33 of the mounting frame 30 in different positions. This snap fit connection allows for a connection of the cover 80 to the mounting frame 30. The snap fit connection between the latching openings 33 of the mounting frame 30 and the toothed latching lugs 84 of the cover 80 can be seen in particular in figure 4.

The first sealing membrane 40 is configured to rest against a mounting flange of the flush-mounted box and/or against a surface of the wall.

The second sealing membrane 42 is arranged circumferentially along the periphery of the mounting window 36. The electrical device 20 can further comprise at least a functional module 60 received in the mounting window 36, the second sealing membrane 42 resting against a rear side 62 of the functional module 60.

The mounting frame 30 together with the first sealing membrane 40 and/or the second sealing membrane 42 can form a monoblock structure, thereby reducing the number of separate parts of the electrical device 20.

The mounting frame 30 can serve as a universal support for all types of functional modules 60. The second sealing membrane 42 can therefore be configured to be suitable for all types of functional modules 60.

The functional module 60 can be mounted to the mounting frame 30 via clipping means. The second sealing membrane 42 can be present on the front side 32 of the mounting frame 40 in the vicinity of the clipping means.

The first sealing membrane 40 and/or the second sealing membrane 42 can be made of an elastomer, preferably a thermoplastic elastomer.

The first sealing membrane 40 can be attached to the back side 34 of the mounting frame 30 by overmoulding.

The second sealing membrane 42 can be attached to the front side 32 of the mounting frame 30 by overmoulding.

The method for manufacturing an electrical device 20 according to the application comprises the following steps:
- providing a mounting frame 30 having a front side 32 and a back side 34; and
- attaching a first sealing membrane 40 to the back side 34 of the mounting frame 30 such that the first sealing membrane covers at least partially the back side 34 of the mounting frame 30.

The first sealing membrane 40 is attached to the back side 34 of the mounting frame 30 such that the one or several fixation openings 31 and/or the one or several latching openings 33 are covered by the first sealing membrane 40.

A second sealing membrane 42 is further attached to the front side 32 of the mounting frame 30 such that the second sealing membrane 42 covers at least partially the front side 32 of the mounting frame 30.

The second sealing membrane 42 is attached to the front side 32 of the mounting frame 30 such that the second sealing membrane 42 circumferentially surrounds the periphery of the mounting window 36.

A functional module 60 can be provided and can be received in the mounting window 36 such that the second sealing membrane 42 rests against a rear side 62 of the functional module 60.

The first sealing membrane 40 and/or the second sealing membrane 42 can be made of an elastomer, preferably a thermoplastic elastomer.

The first sealing membrane 40 can be attached to the back side 34 of the mounting frame 30 and/or the second sealing membrane 42 can be attached to the front side 32 of the mounting frame 30 by overmoulding, preferably by overmoulding during the same production step and/or in the same moulding tool.

The first sealing membrane 40 can reduce the air leakage between the mounting frame 30 and the surface of the wall presenting the opening or recess in which the wall-mounted box inserted. The first sealing membrane 40 further reduces the air leakage in vicinity of the fixation screws with which the electrical device 20 is mounted into the wall-mounted box and affixed to the wall-mounted box. The second sealing membrane 42 can reduce the air leakage between the functional module 60 and the mounting frame 30.

Electrical device 20 according to the present application has a further advantage of reducing the noise generated by a vibration of the functional module 60 in the mounting frame 30 (bumper effect). This is particularly beneficial when the functional module 60 is a switching device generating vibrations when activated by a user.

Of course, the invention is not limited to the at least one embodiment described and represented in the accompanying drawings. Modifications remain possible, particularly from the viewpoint of the composition of the various elements or by substitution of technical equivalents without thereby exceeding the field of protection of the invention.

## Claims

1. Electrical device to be mounted into a flush-mounted box, the flush-mounted box being inserted in an opening or a recess present in a wall, the electrical device (20) comprising a mounting frame (30) having a front side (32) and a back side (34) and a functional module (60), wherein the electrical device (20) further comprises a first sealing membrane (40) attached to the back side (34) of the mounting frame (30) and covering at least partially the back side (34) of the mounting frame (30), the mounting frame (30) comprising a mounting window (36) for receiving the functional module (60) and a second sealing membrane (42) attached to the front side (32) of the mounting frame (30), covering at least partially the front side (32) of the mounting frame (30) and being configured to rest against a back surface (62) of the functional module (60) received in the mounting window (36), the mounting frame (30) further comprising one or several fixation openings (31) and/or one or several latching openings (33), **characterized in that** the first sealing membrane (40) covers the one or several fixation openings (31) and/or the one or several latching openings (33), and **in that** the second sealing membrane (42) is arranged circumferentially along the periphery of the mounting window (36).

2. Electrical device according to claim 1, **characterized in that** the first sealing membrane (40) is configured to rest against a mounting flange of the flush-mounted box and/or against a surface of the wall.

3. Electrical device according to any one of the claims 1 or 2, **characterized by** a functional module (60) received in the mounting window (36), the second sealing membrane (42) resting against a rear side (62) of the functional module (60).

4. Electrical device according to any one of the claims 1 to 3, **characterized in that** the first sealing membrane (40) and/or the second sealing membrane (42) is/are made of an elastomer, preferably a thermoplastic elastomer.

5. Electrical device according to any one of the claims 1 to 4, **characterized in that** the second sealing membrane (42) is attached to the front side (32) of the mounting frame (30) by overmoulding.

6. Electrical device according to any one of the claims 1 to 5, **characterized in that** the first sealing membrane (40) is attached to the back side (34) of the mounting frame (30) by overmoulding.

7. Method for manufacturing an electrical device (20) according to any one of the claims 1 to 6, comprising the following steps:
- providing a mounting frame (30) having a front side (32) and a back side (34);
- attaching a first sealing membrane (40) to the back side (34) of the mounting frame (30) such that the first sealing membrane covers at least partially the back side (34) of the mounting frame (30), and further covers one or several fixation openings (31) and/or one or several latching openings (33) comprised in the mounting frame (30); and
- attaching a second sealing membrane (42) to the front side (32) of a mounting frame (30) such that the second sealing membrane (42) circumferentially surrounds a periphery of a mounting window (36) comprised in the mounting frame, covering at least partially the front side (32) of the mounting frame (30).

8. Method according to claim 7, **characterized in that** a functional module (60) is provided and is received in the mounting window (36) such that the second sealing membrane (42) rests against a rear side (62) of the functional module (60).

9. Method according to claim 7 or 8, **characterized in that** the first sealing membrane (40) and/or the second sealing membrane (42) is/are made of an elastomer, preferably a thermoplastic elastomer.

10. Method according to any one of the claims 7 to 9, **characterized in that** the first sealing membrane (40) is attached to the back side (34) of the mounting frame (30) and/or the second sealing membrane (42) is attached to the front side (32) of the mounting frame (30) by overmoulding, preferably by overmoulding during the same production step and/or in the same moulding tool.

## Patentansprüche

1. Elektrische Vorrichtung, die in eine Unterputzdose zu montieren ist, wobei die Unterputzdose in eine Öffnung oder eine Aussparung eingesetzt ist, die in einer Wand vorhanden ist, wobei die elektrische Vorrichtung (20) einen Montagerahmen (30) mit einer Vorderseite (32) und einer Rückseite (34) und einem Funktionsmodul (60) umfasst, wobei die elektrische Vorrichtung (20) ferner eine erste Dichtungsmembran (40) umfasst, die an der Rückseite (34) des Montagerahmens (30) angebracht ist und die Rückseite (34) des Montagerahmens (30) zumindest teilweise bedeckt, wobei der Montagerahmen (30) ein Montagefenster (36) zum Aufnehmen des Funktionsmoduls (60) und eine zweite Dichtungsmembran (42) umfasst, die an der Vorderseite (32) des Montagerahmens (30) angebracht ist, zumindest teilweise die Vorderseite (32) des Montagerahmens (30) bedeckt und dazu ausgelegt ist, an einer in dem Montagefenster (36) aufgenommenen Rückfläche (62) des Funktionsmoduls (60) anzuliegen, wobei der Montagerahmen (30) ferner eine oder mehrere Befestigungsöffnungen (31) und/oder eine oder mehrere Verriegelungsöffnungen (33) umfasst, **dadurch gekennzeichnet, dass** die erste Dichtungsmembran (40) die eine oder mehreren Befestigungsöffnungen (31) und/oder die eine oder mehreren Verriegelungsöffnungen (33) bedeckt und dass die zweite Dichtungsmembran (42) umlaufend entlang des Umfangs des Montagefensters (36) angeordnet ist.

2. Elektrische Vorrichtung nach Anspruch 1, **dadurch gekennzeichnet, dass** die erste Dichtungsmembran (40) dazu ausgelegt ist, an einem Montageflansch der Unterputzdose und/oder an einer Oberfläche der Wand anzuliegen.

3. Elektrische Vorrichtung nach einem der Ansprüche 1 oder 2, **gekennzeichnet durch** ein in dem Montagefenster (36) aufgenommenes Funktionsmodul (60), wobei die zweite Dichtungsmembran (42) an einer Rückseite (62) des Funktionsmoduls (60) anliegt.

4. Elektrische Vorrichtung nach einem der Ansprüche 1 bis 3, **dadurch gekennzeichnet, dass** die erste Dichtungsmembran (40) und/oder die zweite Dichtungsmembran (42) aus einem Elastomer, vorzugsweise einem thermoplastischen Elastomer, besteht/bestehen.

5. Elektrische Vorrichtung nach einem der Ansprüche 1 bis 4, **dadurch gekennzeichnet, dass** die zweite Dichtungsmembran (42) an der Vorderseite (32) des Montagerahmens (30) durch Umspritzen befestigt ist.

6. Elektrische Vorrichtung nach einem der Ansprüche 1 bis 5, **dadurch gekennzeichnet, dass** die erste Dichtungsmembran (40) an der Rückseite (34) des Montagerahmens (30) durch Umspritzen befestigt ist.

7. Verfahren zum Herstellen einer elektrischen Vorrichtung (20) nach einem der Ansprüche 1 bis 6, die folgenden Schritte umfassend:
- Vorsehen eines Montagerahmens (30) mit einer Vorderseite (32) und einer Rückseite (34);
- Anbringen einer ersten Dichtungsmembran (40) an der Rückseite (34) des Montagerahmens (30), so dass die erste Dichtungsmembran zumindest teilweise die Rückseite (34) des Montagerahmens (30) bedeckt und ferner eine oder mehrere Befestigungsöffnungen (31) und/oder eine oder mehrere Verriegelungsöffnungen (33), die in dem Montagerahmen (30) enthalten sind, bedeckt; und
- Anbringen einer zweiten Dichtungsmembran (42) an der Vorderseite (32) eines Montagerahmens (30), so dass die zweite Dichtungsmembran (42) einen Umfang eines Montagefensters (36), das in dem Montagerahmen enthalten ist, umlaufend umgibt und die Vorderseite (32) des Montagerahmens (30) zumindest teilweise bedeckt.

8. Verfahren nach Anspruch 7, **dadurch gekennzeichnet, dass** ein Funktionsmodul (60) vorgesehen ist und derart in dem Montagefenster (36) aufgenommen wird, dass die zweite Dichtungsmembran (42) an einer Rückseite (62) des Funktionsmoduls (60) anliegt.

9. Verfahren nach Anspruch 7 oder 8, **dadurch gekennzeichnet, dass** die erste Dichtungsmembran (40) und/oder die zweite Dichtungsmembran (42) aus einem Elastomer, vorzugsweise einem thermoplastischen Elastomer, besteht/bestehen.

10. Verfahren nach einem der Ansprüche 7 bis 9, **dadurch gekennzeichnet, dass** die erste Dichtungsmembran (40) an der Rückseite (34) des Montagerahmens (30) und/oder die zweite Dichtungsmembran (42) an der Vorderseite (32) des Montagerahmens (30) durch Umspritzen, vorzugsweise durch Umspritzen während des gleichen Fertigungsschritts und/oder im gleichen Formwerkzeug, angebracht wird.

## Revendications

1. Appareil électrique à monter dans un boîtier encastré, le boîtier encastré étant inséré dans une ouverture ou un logement présent dans une paroi, l'appareil électrique (20) comprenant un cadre de montage (30) ayant un côté avant (32) et un côté arrière (34) et un module fonctionnel (60), l'appareil électrique (20) comportant en outre une première membrane d'étanchéité (40) fixée au côté arrière (34) du cadre de montage (30) et recouvrant au moins partiellement le côté arrière (34) du cadre de montage (30), le cadre de montage (30) comprenant une fenêtre de montage (36) destinée à recevoir le module fonctionnel (60) et une deuxième membrane d'étanchéité (42) fixée au côté avant (32) du cadre de montage (30), recouvrant au moins partiellement le côté avant (32) du cadre de montage (30) et étant configurée pour reposer contre une surface arrière (62) du module fonctionnel (60) reçu dans la fenêtre de montage (36), le cadre de montage (30) comprenant en outre un ou plusieurs orifices de fixation (31) et/ou un ou plusieurs orifices d'accrochage (33), **caractérisé en ce que** la première membrane d'étanchéité (40) recouvre l'orifice ou les orifices de fixation (31) et/ou l'orifice ou les orifices d'accrochage (33), et **en ce que** la deuxième membrane d'étanchéité (42) est disposée circonférentiellement le long de la périphérie de la fenêtre de montage (36).

2. Appareil électrique selon la revendication 1, **caractérisé en ce que** la première membrane d'étanchéité (40) est configurée pour reposer contre un rebord de montage du boîtier encastré et/ou contre une surface de la paroi.

3. Appareil électrique selon l'une quelconque des revendications 1 ou 2, **caractérisé par** un module fonctionnel (60) reçu dans la fenêtre de montage (36), la deuxième membrane d'étanchéité (42) reposant contre un côté arrière (62) du module fonctionnel (60).

4. Appareil électrique selon l'une quelconque des revendications 1 à 3, **caractérisé en ce que** la première membrane d'étanchéité (40) et/ou la deuxième membrane d'étanchéité (42) est/sont composée(s) d'un élastomère, de préférence un élastomère thermoplastique.

5. Appareil électrique selon l'une quelconque des revendications 1 à 4, **caractérisé en ce que** la deuxième membrane d'étanchéité (42) est fixée au côté avant (32) du cadre de montage (30) par surmoulage.

6. Appareil électrique selon l'une quelconque des revendications 1 à 5, **caractérisé en ce que** la première membrane d'étanchéité (40) est fixée au côté arrière (34) du cadre de montage (30) par surmoulage.

7. Procédé de fabrication d'un appareil électrique (20) selon l'une quelconque des revendications 1 à 6, comprenant les étapes suivantes :
- préparer un cadre de montage (30) présentant un côté avant (32) et un côté arrière (34) ;
- fixer une première membrane d'étanchéité (40) au côté arrière (34) du cadre de montage (30) de sorte que la première membrane d'étanchéité recouvre au moins partiellement le côté arrière (34) du cadre de montage (30), et recouvre en outre un ou plusieurs orifices de fixation (31) et/ou un ou plusieurs orifices d'accrochage (33) définis dans le cadre de montage (30) ; et
- fixer une deuxième membrane d'étanchéité (42) au côté avant (32) d'un cadre de montage (30) de sorte que la deuxième membrane d'étanchéité (42) entoure circonférentiellement une périphérie d'une fenêtre de montage (36) définie dans le cadre de montage, en recouvrant au moins partiellement le côté avant (32) du cadre de montage (30).

8. Procédé selon la revendication 7, **caractérisé en ce qu'**un module fonctionnel (60) est préparé et est reçu dans la fenêtre de montage (36) de telle sorte que la deuxième membrane d'étanchéité (42) repose contre un côté arrière (62) du module fonctionnel (60).

9. Procédé selon la revendication 7 ou 8, **caractérisé en ce que** la première membrane d'étanchéité (40) et/ou la deuxième membrane d'étanchéité (42) est/sont composée(s) d'un élastomère, de préférence un élastomère thermoplastique.

10. Procédé selon l'une quelconque des revendications 7 à 9, **caractérisé en ce que** la première membrane d'étanchéité (40) est fixée au côté arrière (34) du cadre de montage (30) et/ou la deuxième membrane d'étanchéité (42) est fixée au côté avant (32) du cadre de montage (30) par surmoulage, de préférence par surmoulage durant la même étape de production et/ou dans le même outil de moulage.
